**Europäisches Patentamt**

**European Patent Office**

**Office européen des brevets**

(19)

(11) Veröffentlichungsnummer: **0 069 050**
**B1**

(12) **EUROPÄISCHE PATENTSCHRIFT**

(45) Veröffentlichungstag der Patentschrift:
**20.03.85**

(21) Anmeldenummer: **82730085.6**

(22) Anmeldetag: **24.06.82**

(51) Int. Cl.⁴: **B 65 G 21/14**, F 27 D 1/16,
E 04 G 21/32

(54) **Arbeitserleichternde Einrichtung zur Beförderung von Baumaterial zu einem Arbeitsplatz aus einer höheren Lage in eine niedrigere Lage oder umgekehrt.**

(30) Priorität: **26.06.81 SE 8104002**

(43) Veröffentlichungstag der Anmeldung:
**05.01.83 Patentblatt 83/1**

(45) Bekanntmachung des Hinweises auf die Patenterteilung:
**20.03.85 Patentblatt 85/12**

(84) Benannte Vertragsstaaten:
**AT BE DE FR GB IT LU NL**

(56) Entgegenhaltungen:
**DE - A - 2 846 544**
**US - A - 4 033 463**

(73) Patentinhaber: **MANNESMANN Aktiengesellschaft, Mannesmannufer 2, D-4000 Düsseldorf 1 (DE)**

(72) Erfinder: **Cervin, Gunnar, Grevegatan 32, S-216 17 Malmö (SE)**

(74) Vertreter: **Meissner, Peter E., Dipl.-Ing. et al, Herbertstrasse 22, D-1000 Berlin 33 (DE)**

ACTORUM AG

**Beschreibung**

Die Erfindung betrifft eine arbeitserleichternde Einrichtung zur Beförderung von Baumaterial zu einem Arbeitsplatz aus einer höheren Lage in eine niedrigere Lage oder umgekehrt gemäss dem Oberbegriff des Patentanspruchs 1.

Die Erfindung bezieht sich speziell auf eine Verbesserung der in der SE Auslegeschrift 7712256-2 mit Veröffentlichungsnummer 418 012 beschriebenen Einrichtung, und Zweck der Erfindung ist in erster Line die Fördervorrichtung so zu verbessern, dass die erfindungsgemässe, arbeitserleichternde Einrichtung an Kovertern verwendet werden kann, bei denen ein verhältnismässig geringer Raum über dem oberen Ende des Konverters oder vorkommendenfalls unter dessen unterem Ende vorhanden ist.

Dieser Zweck ist nun mittels der erfindungsgemässen Einrichtung erreicht worden, die die im Patentanspruch 1 angegebenen Kennzeichen und, in bevorzugter Ausführungsform, die in den Patentansprüchen 2-12 angegebenen Kennzeichen erhalten hat.

Die Erfindung ist nachstehend anhand der Zeichnungen näher beschrieben. In den Zeichnungen zeigt:

Fig. 1 eine schematische Ansicht, die einen Konverter im Vertikalschnitt und eine erfindungsgemässe Einrichtung in Seitenansicht veranschaulicht,

Fig. 2 die Fördervorrichtung in einer hinreichend beiseitegeführten Stellung zum Herabsenken einer aus einer Arbeitsplattform und einer Materialempfangsstation bestehenden Einheit in eine untere Lage im Konverter, in welcher die Einheit durch strichpunktierte Linien veranschaulicht ist,

Fig. 3 im Längsschnitt und in grösserem Massstab einen Abschnitt des Kettenförderers und der Schutzrinne in dem Bereich, wo die Förderrichtung nahe der oberen Öffnung des Konverters von horizontaler Richtung in vertikale Richtung übergeht,

Fig. 4 in Detailwiedergabe einen Querschnitt nach der Linie IV-IV in Fig. 2, und

Fig. 5 und 6 schematische Ansichten zweier Abänderungen einer Überleitungsstation zum Überleiten von Material zum Kettenförderer, wobei die Schutzrinne der besseren Übersichtlichkeit halber weggelassen ist.

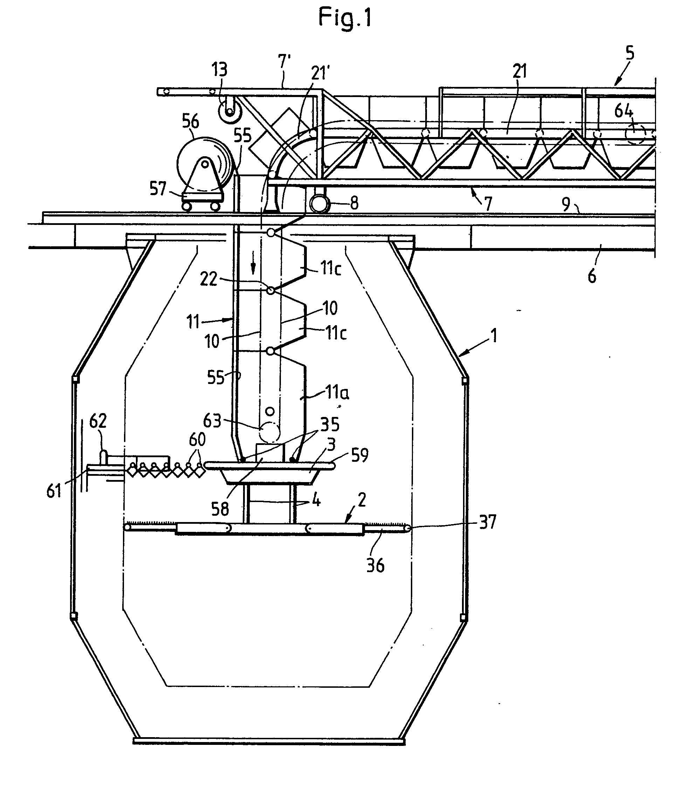

In Fig. 1 ist mit 1 ein offener Konverter gezeigt, in welchem eine Arbeitsplattform 2 und in geeigneter Arbeitshöhe über der Plattform eine Materialempfangsstation 3 hängen. Die Plattform 2 ist mit der Empfangsstation 3 über Tragarme 4 verbunden, während die Empfangsstation 3 mit einer allgemein mit 5 bezeichneten Fördervorrichtung zur Beförderung von Material zum Auskleiden des Konverters in der in der SE Auslegeschrift 7712256-2 beschriebenen Weise verbunden ist.

Der Konverter 1 kann, wie in Fig. 1 gezeigt, mit seinem oberen offenen Ende an einer Plattform 6, einer Brücke oder einer anderen zweckmässigen Unterlage für die erfindungsgemässe Fördervorrichtung gehalten sein.

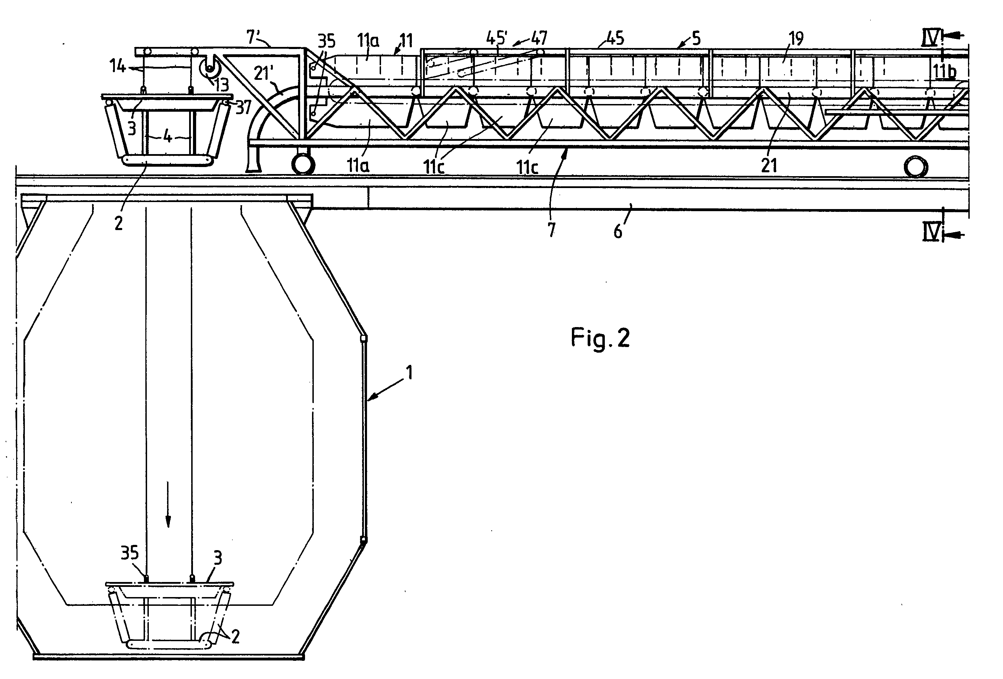

In der dargestellten Ausführung umfasst die Fördervorrichtung 5 ein Gestell 7, das mittels Räder 8 auf Schienen 9 verfahrbar ist, die an der Plattform 6 angeordnet sind. Das Gestell 7 hat somit die Form eines auf einem Gleis auf der Plattform 6 auf den Konverter 1 zu und von ihm weg beweglichen Wagens, wie dies aus einem Vergleich zwischen Fig. 1 und 2 ersichtlich ist.

Die Fördervorrichtung 5 umfasst einen endlosen Kettenförderer 10 mit Mitnehmern von grundsätzlich derselben Art wie sie in der SE Auslegeschrift 7712256-2 beschrieben ist. Gemäss der Erfindung ist der Förderer 10 jedoch mit einer eigenen Schutzvorrichtung versehen, die mit 11 bezeichnet ist und die u.a. den in der genannten Auslegeschrift 7712256-2 beschriebenen, in den Konverter herabhängenden und aus Rohrsätzen bestehenden Turm unnötig macht.

Das Gestell 7 hat an dem vorderen Ende einen vorragenden Teil 7', der ein Tragglied für einen Aufzug 13 mit Tragseilen 14 bildet, an denen die aus der Arbeitsplattform 2 und der Empfangsstation 3 bestehende Einheit aufhängbar ist. In Fig. 2 ist gezeigt, dass die Plattform 2 auf einen verhältnismässig geringen Umfang zusammenklappbar ist, damit sie von oben her durch die Öffnung am oberen Ende des Konverters 1 eingeführt werden kann. In Fig. 1 ist die Plattform 2 in aufgeklappter Arbeitsstellung gezeigt, in welcher sie sich gegen die Innenseite des Konverters abstützt.

Die Schutzvorrichtung 11, die sich vorzugsweise und auch in der dargestellten Ausführung in der ganzen Länge des Kettenförderers 10 von der Empfangsstation 3 zum hinteren Ende des Kettenförderers erstreckt, besteht aus einer Anzahl aneinander angelenkter Abschnitte, von denen ein erster, vorderer Abschnitt mit 11a bezeichnet ist und ein hinterer Endabschnitt mit 11b bezeichnet ist, während eine Reihe von Zwischenabschnitten mit 11c bezeichnet sind.

Die Abschnitte bestehen vorzugsweise aus kräftigem Stahlblech und haben die Form von an den Enden und oben offenen Trögen, die an ihren benachbarten Enden durch Gelenke 12 miteinander gelenkig verbunden sind. Diese Gelenke können ohne Durchtrittszapfen ausgeführt sein, wie weiter unten erwähnt ist, lassen sich jedoch auch Durchtrittszapfen verwenden.

Die Schutzvorrichtung 11 bildet somit eine durch Gelenkbewegung in den Gelenken 12 biegsame Rinne. Die biegsame Schutzrinne 11 und der Förderer 10 sind an den Enden miteinander verbunden, und ausserdem ist der Kettenförderer 10 dadurch in der Rinne 11 getragen, dass Kettenräder 64, 63 an den vorderen und hinteren Umkehrpunkten des Förderers 10 in den vorderen bzw. hinteren Abschnitten 11a bzw. 11b der Rinne 11 vorgesehen sind und dass der Kettenförderer im Verhältnis zu den Seitenwänden der Rinne über Abstütz- und Führungsteile abgestützt und geführt ist, welche im folgenden näher beschrieben sind.

Wie bereits erwähnt, ist das Gestell 7 auf den Konverter zu bzw. von ihm weg hin und her beweglich, und mittels des Gestells ist auch die ganze Fördervorrichtung 5, d.h. der ganze Kettenförderer 10 mit Kettenrädern und Antrieb sowie die ganze Rinne 11, in Richtung auf den Konverter zu und von ihm weg beweglich, ausserdem ist aber die ganze Fördervorrichtung 5 im Verhältnis zum Gestell 7 beweglich, um eine Verlängerung und Verkürzung des vertikalen Teils der Fördervorrichtung durch Verkürzung bzw. Verlängerung deren horizontalen Teils zu gestatten. Das Ergebnis stimmt was den Kettenförderer selbst betrifft mit dem Ergebnis der Verlängerung und Verkürzung der vertikalen und horizontalen Teile des Kettenförderers gemäss der SE Auslegeschrift 7712256-2 überein, bei der erfindungsgemässen Einrichtung werden jedoch vorzugsweise andere im folgenden beschriebene Mittel zur Erzielung dieses Ergebnisses angewendet.

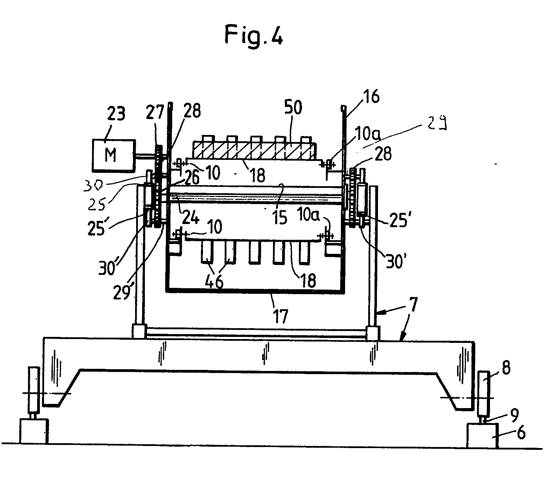

Im obigen ist erwähnt worden, dass die Rinnenabschnitte 11a, 11b, 11c die Form von oben offenen Trögen haben. Indessen hat in der bevorzugten Ausführung, die in Fig. 4 dargestellt ist, jeder Rinnenabschnitt auch eine innere Querwand 15, die sich zwischen dessen Seitenwänden 16 hauptsächlich zwischen den oberen Kanten der Seitenwände und der Bodenwand 17 des Abschnittes erstreckt. Der Kettenförderer 10 hat grundsätzlich dieselbe Ausführung wie der Kettenförderer gemäss der SE Auslegeschrift 7712256-2, d.h. er besteht aus zwei parallelen Ketten 10a, 10b und zwischen diesen verlaufenden Mitnehmern 18. In der erfindungsgemässen Ausführung erstreckt sich jedoch der Kettenförderer durch die Rinne 11 und ist von den Rinnenabschnitten mittels auf deren Innenseite aufgeschweisster Stützflansche 20 abgestützt, die zu einem im folgenden beschriebenen Zweck kreisförmig gekrümmt sind.

Die Querwand 15 in jedem Rinnenabschnitt bildet eine Trennwand zwischen den oberen und unteren Trumen des Kettenförderers.

Der Kettenförderer 10 und die Rinne 11 bilden eine zusammen bewegliche Einheit, die längs ihres horizontalen Teils unter Vermittlung einer Führungsvorrichtung vom Gestell 7 getragen und im Verhältnis zu ihm beweglich ist. Diese Führungsvorrichtung besteht aus zwei mit dem Gestell verbundenen parallelen U-Profilen 21, die mit ihren offenen Seiten einander zugewandt sind, und einem oder mehreren Rädern 22, die von den gegenüberliegenden Seitenwänden der Rinne auf horizontalen Achsen getragen und an der Innenseite des bezüglichen Rades mit einem Flansch versehen sind, mit welchem sich die Räder gegen die Kanten des einen oder beider Flansche der U-Profile 21 abstützen. Die Führungsprofile 21 erstrecken sich vorzugsweise in der ganzen Länge des Gestells 7 und weisen an dem vorderen Ende jedes Führungsprofils 21 einen Verlängerungsteil 21' auf, welcher kreisförmig gekrümmt ist, wie in Fig. 1 gezeigt, um die Rinne in einem Überleitungsbereich von der horizontalen Richtung längs des Gestells in die vertikale Richtung nach unten zur oberen Öffnung des Konverters hin und durch diese hindurch zu lenken.

Die Rinne 11 und somit der Förderer 10 sind längs des Gestells 7 durch einen Antrieb beweglich, und zwar einen im Verhältnis zu einem Rinnenabschnitt fixierten Antriebsmotor 23. Dieser Motor 23 treibt die Welle 24, die sich durch einen Rinnenabschnitt, beispielsweise 11b, erstreckt, an dem der Antriebsmotor befestigt ist. Die Welle 24 trägt die Stütz- und Führungsräder 22 an diesem Abschnitt ähnlich wie an den übrigen Abschnitten auf Endteilen an den Aussenseiten der Seitenwände 16. Im einfachsten Fall könnte der Antriebsmotor 23 die Räder 22 durch direkten Antrieb der Welle 24 treiben, um jedoch ein Rutschen der Räder im Verhältnis zu den Führungsprofilen 21 zu vermeiden, erfolgt der Antrieb über eine Zahnstange 25, die mit dem Gestell verbunden ist und sich längs der ganzen Bewegungsbahn der Rinne 11 und des Förderers 10 im Verhältnis zum Gestell 7 erstreckt.

An dem einen Endteil der Welle 24 ist zwischen dem entsprechenden Rad 22 und der Aussenseite der Rinne ein Zahnrad 26 befestigt, das von einem auf der Motorwelle befestigten Zahnrad 27 über ein Zwischenzahnrad 28 angetrieben wird, welches an einer mit der Rinne verbundenen Welle 29 drehbar gelagert ist. Das Zwischenzahnrad 28 ist mit einem ausserhalb desselben gelegenen Ritzel 30 fest verbunden, das mit der Zahnstange 25 kämmt, die auf der Oberseite des entsprechenden Führungsprofils 21 befestigt sein kann. Erforderlichenfalls kann auch an der Unterseite des Führungsprofils 21 eine Zahnstange 25' befestigt sein, mit welcher ein mittels eines anderen Zwischenzahnrades 28' verbundenes zweites Ritzel 30' kämmt. Zum ausgeglichenen Antrieb der Rinne über die Welle 24 ist vorzugsweise an dem zweiten Endteil der Welle ein Zahnrad 26 befestigt, das über ein Zwischenzahnrad 28 oder 28' auf der Oberseite bzw. an der Unterseite des Führungsprofils 21 auf dieser Seite kämmt.

Es sei bemerkt, dass die Kraftübertragung vom Antriebsmotor 23 auf die Welle 24 in einer anderen Weise angeordnet werden könnte, z.B. indem der Antriebsmotor mittels eines Zahnrades auf der Antriebswelle das Ritzel 30 direkt treibt, welches seinerseits über ein Zwischenzahnrad und ein auf der Welle befestigtes Zahnrad die Welle treibt. In einer anderen denkbaren Abänderung kann der Antriebsmotor die Welle 24 über eine Kettenrad- und Kettentransmission treiben, wobei ein Zahnradgetriebe die Bewegung von der Welle auf die Zahnstange oder Zahnstangen an entweder dem einen Führungsprofil 21 oder beiden Führungsprofilen überträgt.

Durch die beschriebene Anordnung kann die Rinne 11 zusammen mit dem Förderer 10 zwangsläufig, d.h. ohne Rutschneigung, im Verhältnis zum Gestell 7 hin und her bewegt werden, um die erforderliche Bewegung zwischen der Lage in Fig. 2 und einer unteren Endlage des Förderers und der Rinne im Konverter 1 zu ermöglichen.

Um das Gestell 7 zwischen diesen entgegengesetzten Endlagen gemäss Fig. 1 und 2 zu bewegen, kann man eine Seilwinde mit Antriebsmotor verwenden, die auf dem Gestell 7 angebracht ist und von der Seile über Seilscheiben laufen, die an festen Punkten, wie der Plattform 6, fixiert sind. Zur Bewegung des Gestells 7 können indessen viele verschiedene Typen von Antrieben mit völlig befriedigendem Ergebnis verwendet werden, weshalb kein Beispiel eines solchen Antriebs veranschaulicht ist. Wichtig ist jedoch, dass das Gestell 7 in seiner Stellung gemäss Fig. 1 sicher fixiert werden kann, damit auch geringe Bewegungen verhindert werden, die eine Instabilität des senkrecht herabhängenden Teils der Rinne 11 und des Förderers 10 mit der Plattform 2 und der Empfangsstation 3 ergeben könnten.

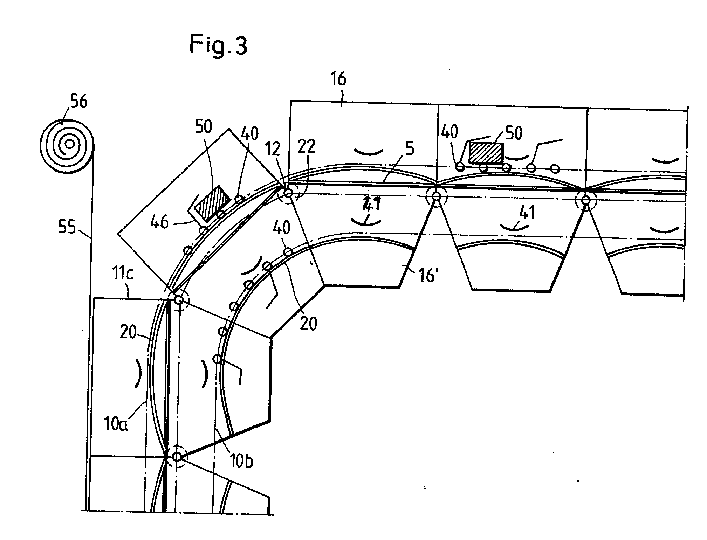

Wie aus Fig. 1 ersichtlich, ist die Empfangsstation 3 mit Hilfe eines Bolzenverbandes an der Rinne 11 aufgehängt. Die Verbindung kann beispielsweise nach Herabsenken der aus der Plattform und der Empfangsstation bestehenden Einheit 2, 3 in die in Fig. 3 gezeigte untere Endlage ausgeführt werden, in welcher die Einheit auf dem Boden des Konverters 1 ruht. Danach wird das Gestell 7 aus der in Fig. 2 dargestellten Lage in die in Fig. 1 gezeigte vordere Endlage bewegt. In dieser Lage (oder demzuvor) werden die Seile 14 losgemacht und aus dem Konverter hochgezogen, wonach der Förderer 10 und die Rinne 11 nach vorn gefahren und mit ihren vorderen Endteilen mit Hilfe des Antriebsmotors 23 nach unten in den Konverter 1 geschoben werden, so dass der vordere Rinnenabschnitt 11a bis zur Materialempfangsstation 3 heranreicht. Die Verbindung des vorderen Rinnenabschnittes 11a mit der Materialempfangsstation 3 kann mittels Bolzen ausgeführt werden, die in Bolzenlöcher, vorgesehen in Seilbefestigungen 35 auf der Einheit 2, 3 und Löcher in dem vorderen Ende des Rinnenabschnittes 11a eingeführt werden.

Nach einem anderen Verfahren zur Verbindung der Rinne 11 mit der Einheit 2, 3, das dann zur Anwendung kommen kann, wenn die Seile 14 das Einführen und Herabsenken der Fördervorrichtung 5, d.h. der Rinne 11 und des Förderers 10, nicht behindern, kann man die beschriebene Verbindung mit der Einheit 2, 3 im oberen Teil des Konverters 1 anbringen, z.B. mit der Materialempfangsstation 3 auf gleicher Höhe mit dem oberen Ende des Konverters 1.

Während des Verbindungsvorganges kann die Plattform 2 aufgeklappt und es können verschiebbare Plattformabschnitte 36 herausgeschoben sein, wobei sie mit Stützrädern 37 gegen die Innenseite des Konverters anliegen.

Es ist zu merken, dass die Schutzrinne 11 grosse Abmessungen hat. Als Beispiel einer üblichen Abmessung sei erwähnt, dass die Rinne eine Breite von etwa 1,2 m und eine gleichgrosse Tiefe vom Boden 17 der Rinne zu den Aussenkanten der Seitenwände 16 haben kann. Zwischen dem äusseren Kettenfördererturm und den Aussenkanten der Rinnenabschnitte an der offenen Seite dieser Abschnitte ist ein breiter und verhältnismässig tiefer Zwischenraum vorhanden, in welchem sich Personal zur Plattform hin und von ihr weg bewegen kann, wenn der Förderer 10 stillgesetzt ist. Die Beförderung des Personals zur Arbeitsplattform 2 hin und von ihr weg kann in einem Fahrkorb durchgeführt werden, welcher an den Seilen 14 aufgehängt werden kann, und beim Herabsenken in den Konverter kann der Fahrkorb zweckmässigerweise in Anlage gegen die Seitenwände der Rinne geführt sein, um an der Materialempfangsstation 3 zu landen, von wo sich das Personal z.B. mittels einer Leiter oder anderer Weise bequem zur Arbeitsplattform 2 begeben kann.

Wie bereits erwähnt und wie in Fig. 3 deutlich veranschaulicht, werden die parallelen Ketten des Kettenförderers von Führungsflanschen 20 an den Seitenwänden 16 der Rinnenabschnitte geführt. Diese Führungsflansche sind kreisförmig gekrümmt und bilden längs der geraden Strecken des Kettenförderers Punktführung für Führungsrollen 14 an den Gelenkzapfen der Kettenglieder. In dem gekrümmten Überleitungsteil der Rinne und des Förderers bilden die Führungsflansche kontinuierliche, kreisförmig gekrümmte Führungen zur genauen Formung der Krümmung der Fördervorrichtung und zur gleichförmigen Lenkung. Es sei weiterhin bemerkt, dass sich die Seitenwände jedes Rinnenabschnittes im Bereich unterhalb des oberen Trums des Kettenförderers trapezförmig verjüngen, wobei die Bemessung von der Art ist, dass sich die unteren Endteile 16' der Seitenwände 16 zumindest hauptsächlich Kante an Kante aneinander anschliessen, ohne dass eine deformierende Klemmwirkung entsteht. An den Innenseiten der Seitenwände können ebenfalls gekrümmte obere Führungsflansche 41 angeordnet sein, um die Ketten gegen die unteren Führungsflansche 20 in Anlage zu halten und der Neigung zur Verschiebung der Ketten in der Querrichtung vorzubeugen.

Mit der erfindungsgemässen Fördervorrichtung 5 wird Material, wie Formstein, zur Auskleidung des Konverters in Anlage gegen die Mitnehmer 18 in an sich bekannter Weise befördert, wobei die Gefahr eines Herunterrutschens von Steinen oder zerbrochenen Steinstücken vermittels der Rinne wirksam verhütet wird.

Die Rinne 11 ist an der Oberseite offen um eine Übertragung von Material zum Förderer 10 an dem horizontalen Teil der Rinne mit Hilfe eines Zuförderers 45 zu gestatten, welcher die Form eines Bandförderers haben kann und vom Gestell 7 längs und oberhalb der Rinne 11 getragen ist und welcher einen geneigten Förderteil 45' an dem vorderen Ende hat, der sich schräg nach vorn und unten in die Rinne zur Abgabe von Material, wie Formstein, auf dem oberen Trum des Förderers 10 hineinerstreckt. Dieser geneigte Teil ist an einer vorderen Partie des Gestells 7 gelegen, um Material unmittelbar vor dem Punkt abgeben zu können, wo der Förderer 10 in der vertikal nach unten verlaufenden Förderrichtung abgebogen wird. Die Mitnehmer 18 haben in der veranschaulichten Ausführung des Förderers 10 eigentlich die Form von Fachbrettern, die von einer Anzahl paralleler, gekrümmter Finger 46 gebildet sind (siehe Fig. 4). Diese Fachbretter 18 bilden entlang des Hauptteils der durch den Förderer 10 zustandegebrachten Förderstrecke eher Tragglieder als Mitnehmer.

Wie in Fig. 2 gezeigt, ist oberhalb des geneigten Teils 45' des Zuförderers 45 ein Hilfsförderer 47 vorgesehen, der in entgegengesetztem Sinne zum Förderer 45 angetrieben wird.

Der Hilfsförderer 47 ist mit vorstehenden Fingern versehen, die so vorgesehen sind, dass sie zwischen den Fingern 46 passieren, die die Fachbretter 18 des Förderers 10 bilden. Indem der Förderer 47 mit derselben Geschwindigkeit wie der Förderer 10 oder mit etwas höherer Geschwindigkeit als dieser angetrieben wird, wird mittels der Finger Material vom Zuförderer in die Fächer gegen die Böden derselben hineingeschoben. Um Störungen zu verhindern, kann der Hilfsförderer 47, der ein kurzer Kettenförderer sein kann, über eine Rutschkupplung angetrieben werden, welche eine Überbelastung des Hilfsförderers verhindert und eine unnötige Belastung des Hauptförderers 10 verhütet, wenn jeder Formstein, wie z.B. 50, die Bodenlage am bezüglichen Fachbrett 18 erreicht.

Der Zuförderer 45 und der Hilfsförderer 47 sind nur in Fig. 2 gezeigt, um nicht unnötigerweise Einzelteile in Fig. 1 und 3 zu verbergen und diese Figuren schwerverständlich zu machen.

Durch die beschriebene Anordnung der mit dem Förderer 10 zusammenwirkenden Rinne 11 wird, wie bereits erwähnt, die Gefahr eines Herunterfallens von Material, wie Formsteine oder losgebrochene Formsteinstücke, in den Bereichen in der Nähe und innerhalb des Konverters 1 verhütet, wo sich Personal während der Auskleidungsarbeit aufhält. Es ist auch möglich, die offene Aussenseite der Rinne in deren vertikalen Teil im Konverter 1 mit Hilfe eines biegsamen Elementes, wie z.B. eines Gitters, eines Stahlbandes 55, gelenkig verbundener Platten oder dgl. zu verschliessen, die z.B. in der Form einer Rolle 56 auf einem Wagen 57 getragen sind, welcher auf dem Gleis 9 beweglich ist. Von der Rolle 56 lässt sich das Schutzband 55 ähnlich wie eine Jalousie oder ein Vorhang längs des vertikalen Teils der offenen Aussenseite der Rinne 11 herunterziehen und mittels rinnenförmiger Führungen (nicht gezeigt) zu einem Punkt gleich oberhalb des unteren Abgabeendes des Förderers, d.h. ein kleines Stück oberhalb des Punktes führen, wo das Material durch eine Öffnung bei 58 auf einen kreisförmigen Drehtisch 59 herausgetragen wird, auf dem das Material auf einen verlängerbaren Rolltisch 60 in hauptsächlich derselben Weise übergeführt wird, wie gemäss der SE Auslegeschrift 7712256-2 zur Überführung zum Verlegungsplatz auf der Mauerung 61, die die Auskleidung des Konverters bildet. Bei 62 ist ein Stützrad gezeigt, das auf dem oberen Rand der Mauerung 61 ein Stück vor dem Rolltisch 60 läuft, welcher in bekannter Weise rund um den Drehtisch 59 in der Empfangsstation 3 beweglich ist.

Durch die oben beschriebene Anordnung der Schutzrinne 11 erübrigt sich nicht nur der teleskopisch verlängerbare Turm in der Konstruktion gemäss der oben erwähnten Auslegeschrift, sondern auch Kettenräder für den Kettenförderer 10 zwischen dessen horizontalen und vertikalen Teilen, wo die Führung gemäss der Erfindung von den Führungsflanschen übernommen wird. Der Antrieb des Kettenförderers 10 im Verhältnis zur Rinne 11 kann mit Hilfe eines Antriebsmotors ausgeführt werden, welcher in dem hinteren Endabschnitt 11b der Rinne vorgesehen ist und das hintere Kettenrad 64 antreibt. Auch der vordere Rinnenabschnitt 11a kann, wenn dies für nötig erachtet wird, einen Antriebsmotor zum Antreiben des vorderen Kettenrades 63 aufweisen, das sich im Betrieb in der Nähe der Empfangsstation 3 befindet.

Es wurde oben erwähnt, dass das Personal, z.B. mit Hilfe eines Aufzugs zur Plattform 2 gebracht und von ihr weggebracht werden kann. Indessen kann sich Personal bequem von der oberen Plattform 6 zur Arbeitsplattform 2 begeben, indem die Arbeitsplattform 2 ganz einfach mit Hilfe des Förderers 10 und der Rinne 11 in eine obere Stellung hochgezogen wird, d.h. zum oberen offenen Ende des Konverters 1, wo die Rinnenabschnitte den Zutritt dadurch erleichtern, dass sie an der Aussenseite offen sind (nach links längs des vertikalen Teils in Fig. 1). Die Plattform 2 mit dem sich darauf befindenden Personal wird dann mit Hilfe der Fördervorrichtung herabgesenkt. Während des Betriebes, wenn die Jalousie 55 heruntergezogen ist, wird das Material längs der vertikalen Förderstrecke in einem geschlossenen Tunnel befördert. Dieser Tunnel verhütet jede Gefahr, dass dem Personal durch herunterrutschendes Material Schaden zugefügt wird, und auch die Gefahr, dass dem Personal durch den Förderer 10 und das untere Kettenrad 63 Schaden zugefügt wird. Der untere Rinnenabschnitt 11 in Fig. 1 bildet zusammen mit der Jalousie 55 auch ein wirksames Mittel gegen die Gefahr eines unkontrollierten Herausstürzens eines Formsteins aus dem Bereich, wo er den Förderer 10 bei dessen Umkehr um das Kettenrad 63 verlässt.

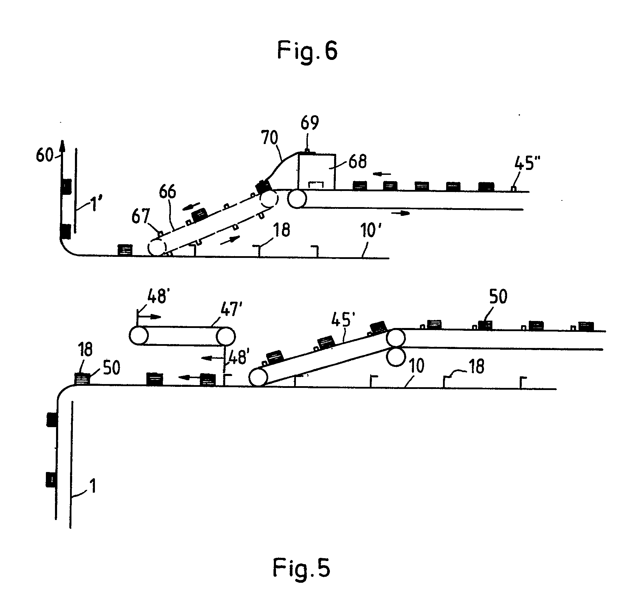

In Fig. 5 ist ein Beispiel einer Überleitungsstation mit einem Zuförderer 45 gezeigt, welcher einen nach unten geneigten Teil 45' von grundsätzlich derselben Art wie in Fig. 2 aufweist, jedoch mit dem Unterschied, dass dieser Teil aus einem Kettenförderer mit Mitnehmern besteht. Der Hilfsförderer 47' besteht indessen hier aus einem kurzen horizontalen Förderer mit einigen wenigen Mitnehmern 48' in der Form von geraden, von dem Hilfsförderer in rechtem Winkel vorstehenden Fingern. Während des Betriebes werden Formsteine 50 nach vorn und unten in Richtung auf den Kettenförderer 10 zu befördert, wobei jeder Formstein 50, der das untere Ende des geneigten Endteils 45' des Zuförderers 45 erreicht, von den Fingern 48' des Hilfsförderers 47' ergriffen und in der im Anschluss an Fig. 2 beschriebenen Weise nach vorn geschoben wird, so dass die Formsteine gegen die Böden der Fächer 18 hineingeführt werden. Der Hilfsförderer 47' wird vorzugsweise über eine Rutschkupplung angetrieben und seine Geschwindigkeit und Antriebskraft (Druck) werden derart bemessen, dass die flügelähnlichen Finger 48' Formsteine oder Säcke mit Füllmassen, wenn derartiges Material befördert werden soll, in feste Lage gegen die Fächer 18 zu führen vermögen.

Die erfindungsgemässe Fördervorrichtung ist im obigen ausschliesslich unter Anwendung auf Beförderung in horizontalem Sinne und von oben nach unten durch Konverter 1 mit offenem oberen Ende beschrieben worden. Die erfindungsgemässe Fördervorrichtung ist indessen auch für den entgegengesetzten Beförderungsweg anwendbar, d.h. horizontal und von unten nach oben durch einen Konverter, dessen unteres Ende während der Auskleidungsarbeit offen ist. Dies leuchtet ein, wenn beispielsweise Fig. 1 ganz einfach auf den Kopf gestellt wird, wobei man sofort einsieht, dass in diesem alternativen Fall die Arbeitsplattform 2 und die Empfangsstation 3 ihre Plätze tauschen sollen. Ausserdem soll sich der frühere untere Rinnenabschnitt 11a, der bei dieser Umkehrung einen oberen Endabschnitt bildet, durch eine Öffnung in der Plattform und eine Öffnung in der Empfangsstation hindurcherstrecken, so dass er über die oberhalb der Arbeitsplattform 2 gelegene Empfangsstation hochragt und Material auf den beschriebenen Drehtisch 59 heraustragen kann. Da der vertikale Teil des Förderers 10 und der der Rinne 11 in dem zuerst beschriebenen Ausführungsbeispiel starr sind, muss eine Tragvorrichtung irgendwelcher Art verwendet werden. Eine solche Tragvorrichtung kann von beispielsweise zwei bis vier Teleskopzylindern gebildet werden, die mit ihren unteren Enden von der in diesem Fall unterhalb des Konverters befindlichen Tragvorrichtung 6 getragen sind. Selbstverständlich sollen in diesem Fall auch die Förderrichtung des Förderers 10 umgesteuert und die Rinnenabschnitte umgekehrt werden, so dass die offene Seite nach oben gekehrt ist und nicht nach unten, was der Fall sein wird, wenn man Fig. 2 ganz einfach auf den Kopf stellt. In dem gedachten Fall einer Umkehrung kann die Plattform mit Hilfe der Teleskopzylinder je nach dem Fortschreiten der Auskleidungsarbeit nach oben verschoben werden, da diese Arbeit von unten nach oben stattfindet.

Bei Beförderung von Material von unten nach oben kann von einer Überleitungsstation derjenigen Art Gebrauch gemacht werden, die in Fig. 6 gezeigt ist, wo ein Teil der Konverterwandung bei 1' gezeigt und die Förderrichtung des Kettenförderers 10' durch einen Pfeil 60 angedeutet ist. Der Zuförderer 45'' befindet sich oberhalb des oberen Fördertrums des Kettenförderers 10' in dessen horizontalem Teil unterhalb des Konverters 1' und trägt Material auf einen geneigten Förderer 66 heraus, welcher hauptsächlich dieselbe Funktion hat wie der geneigte Fördererteil 45' in Fig. 5. In diesem Fall erübrigt sich ein Hilfsförderer, wie der Hilfsförderer 47' in Fig. 5, da die Fächer 18 selbst durch ihre Förderrichtung dafür sorgen, dass das Material gegen die Böden der Fächer hineingetragen wird.

In diesem Fall hat der geneigte Förderer 66 verhältnismässig kurze Stützfinger 67, die zwischen die Finger 46 der Fächer 18 greifen. An dem Ende des Überleitungsförderers 5 ist auf einem Gestell 68 mit Hilfe eines Flacheisens 69 oder dgl. eine nachgiebige Feder oder federnde Klappe 70 befestigt, welche beispielsweise und vorzugsweise eine Gummiplatte ist und die Aufgabe hat, Stösse unter Dämpfung durchzulassen oder die Überleitung von Formsteinen von dem Förderer 45 auf den Förderer 66 abzubremsen.

Bei Beförderung von oben nach unten, d.h. mit dem Förderer angeordnet gemäss Fig. 1 und 2, wird die Notwendigkeit beseitigt, das Material bei der Richtungsänderung gleiten zu lassen und erst infolge der Schwerkraft in die richtige Lage auf einem Fachbrett 18 zu bringen. Hierdurch wird die Gefahr von Schäden noch weiter reduziert und bauliche Vereinfachungen erzielt. Zu merken ist auch, dass der Förderer lediglich durch Umsteuerung von dessen Antriebsmotor zum Hochfördern von Material verwendet werden kann, was von grossem Vorteil ist, falls das Personal in einer Umladestation ausserhalb des Förderers Material in einer falschen Programmordnung senden sollte. Raum für eine vorübergehende Lagerung im Turm von Material, das nicht sofort auf den beabsichtigten Platz angelegt werden kann, gibt es nämlich nicht oder steht jedenfalls nur in beschränktem Umfang zur Verfügung.

Eine weitere denkbare Abänderung besteht darin, die oben beschriebene horizontale Streckung des Förderers 10 und der Schutzrinne 11 geneigt anstelle von horizontal anzuordnen, falls dies mit Rücksicht auf den in der Nähe eines Konverters zur Verfügung stehenden Raum erwünscht ist. Naheliegende Abänderungen dieser Art und auch naheliegende Abänderungen von baulichen Einzelteilen fallen in den Rahmen der Erfindung nach den folgenden Patentansprüchen.

**Patentansprüche**

1. Arbeitserleichternde Einrichtung zur Beförderung von Baumaterial aus einer höheren Lage in eine niedrigere Lage oder umgekehrt in der Nähe des Verwendungsplatzes für das Material, wie Beförderung von Formsteinen zum Aufbauen von Innenwänden, insbesondere zum Auskleiden von Konvertern, metallurgischen Öfen, Warmhalteöfen und dergleichen, mit einem Traggebilde bestehend aus einem Gestell (7) für einen endlosen Kettenförderer (10), der in Richtung vom Gestell weg teilweise ausziehbar ist, um mit seinem vom Gestell (7) weg über die gekrümmte Partie einer Führung (21) ausgezogenen Teil einen vertikalen Förderteil für die genannte Beförderung aus einer höheren Lage in eine niedrigere Lage oder umgekehrt zu bilden, dadurch gekennzeichnet, dass der endlose Kettenförderer (10) in einer aus aneinander angelenkten Rinnenabschnitten (11a, 11b, 11c) bestehenden biegsamen Rinne (11) bewegbar ist, welche vom Gestell (7) getragen ist und zusammen mit dem Kettenförderer (10) im Verhältnis zum Gestell (7) ausziehbar ist, um längs des vertikalen Förderteils des Kettenförderers eine Schutzrinne zu bilden, die diesen vertikalen Fördererteil zumindest teilweise umgibt, um Material auf diesem Teil zu halten, und dass die biegsame Rinne auf den nach innen einander zugewandten Seiten kreisförmig gekrümmte Führungsflansche (20) aufweist, die den Kettenförderer (10) für die Überleitung zu dem genannten vertikalen Teil stützen.

2. Einrichtung nach Anspruch 1, dadurch gekennzeichnet, dass das Gestell (7) zwei auf entgegengesetzten Seiten der Rinne (11) getragene Führungen (21) aufweist, die die Rinne (11) mittels Stützrädern oder -rollen (22) führen, welche auf Gelenkzapfen zwischen den Rinnenabschnitten (11a, 11b, 11c) getragen sind, und dass die Führungen (21) die kreisförmig gekrümmte Partie an ihren vorderen Endteilen (21') zur Steuerung der Krümmungsbildung der Rinne im Überleitungsteil aufweisen.

3. Einrichtung nach Anspruch 1 oder 2, dadurch gekennzeichnet, dass die Rinnenabschnitte (11a, 11b, 11c) von hauptsächlich U-förmigem Querschnitt sind mit einer Bodenwand (17) und zwei parallelen Seitenwänden (16), und dass die Seitenwände (16) an ihren nach innen einander zugewandten Seiten die kreisförmig gekrümmten Führungsflansche (20) für Führungsglieder, wie Führungsrollen (40) auf den Kettengliedern des Kettenförderers (10), aufweisen, wobei die kreisförmig gekrümmten Führungsflansche jedes Rinnenabschnittes derart angeordnet sind, dass sie in Bereichen ausserhalb des kreisförmig gekrümmten Überleitungsteils der Rinne punktartige Führungen für den Kettenförderer (10) bilden, jedoch in dem kreisförmig gekrümmten Überleitungsteil zusammen mit den Führungsflanschen zumindest eines benachbarten Rinnenabschnittes kreisförmig gekrümmte kontinuierliche Führungsflächen für den Kettenförderer in dem genannten Überleitungsbereich bilden.

4. Einrichtung nach einem der vorhergehenden Ansprüche, dadurch gekennzeichnet, dass zwei der Abschnitte (11a, 11b) der Rinne Kettenräder (63, 64) für die endlosen Ketten des Kettenförderers (10) an dessen Enden tragen und dass ein Antrieb für die Treibräder des Kettenförderers mit zumindest dem einen dieser Rinnenabschnitte fest verbunden ist.

5. Einrichtung nach einem der vorhergehenden Ansprüche, dadurch gekennzeichnet, dass die Rinne (11) im Verhältnis zum Gestell (7) mittels eines zwischen dem Gestell und der Rinne wirkenden Antriebs (23-30) ausziehbar und einziehbar ist, welcher Antrieb einen von einem Rinnenabschnitt getragenen Antriebsmotor (23) aufweist.

6. Einrichtung nach Anspruch 5, dadurch gekennzeichnet, dass der Antrieb eine vom Antriebsmotor (23) angetriebene Transmission umfasst, welche aus einem von der Rinne getragenen Zahnradgetriebe und zumindest einer vom Gestell (7) getragenen Zahnstange (25) besteht.

7. Einrichtung nach den Ansprüchen 2, 3 und 6, dadurch gekennzeichnet, dass die genannten Führungen aus U-Profilen (21) mit einander zugewandten offenen Seiten zur Aufnahme der Stützräder oder -rollen (22) der Rinnen (11) bestehen und dass diese U-Profile zumindest je eine Zahnstange (25) tragen, mit denen Ritzel (30, 30') in der genannten Zahnradtransmission kämmen.

8. Einrichtung nach einem der vorhergehenden Ansprüche, gekennzeichnet durch einen Verschluss (55) zum Verschliessen der Rinne (11) an deren offener Seite entlang des vertikalen Teils der Rinne.

9. Einrichtung nach Anspruch 8, dadurch gekennzeichnet, dass der Verschluss die Form einer von einer Rolle oder dgl. ausziehbaren Jalousie hat, z.B. in der Form eines biegsamen Stahlbandes, eines Gitters oder eines Streifens aus miteinander gelenkig verbundenen Platten.

10. Einrichtung nach einem der vorhergehenden Ansprüche, dadurch gekennzeichnet, dass der eine vordere Endabschnitt (11a) der Rinne (11) mit einer Empfangsstation (3) für Material, das mittels des Kettenförderers (10) befördert wird, verbindbar ist.

11. Einrichtung nach einem der vorhergehenden Ansprüche, dadurch gekennzeichnet, dass das Gestell (7) oberhalb der einen offenen Seite der Rinne (11) einen Zuförderer (45) trägt, welcher sich mit einem Teil (45') in die Rinne hinuntererstreckt zu einer Lage in der Nähe des oberen Trums des Kettenförderers (10) zur Abgabe von Material an diesen Trum, und dass die Rinne im Verhältnis zum Zuförderer (45) frei verschiebbar angeordnet ist.

12. Einrichtung nach Anspruch 11, dadurch gekennzeichnet, dass sie auch einen Hilfsförderer (4) aufweist, welcher sowohl mit dem Zuförderer (45) als auch mit dem Kettenförderer (10) zusammenwirken soll, um Material vom Zuförderer (45) in bestimmte Lagen auf dem Kettenförderer (10) hinüberzuleiten.

## Claims

1. Labour-facilitating apparatus for the conveyance of building material from a higher position to a lower position or vice versa in the vicinity of the place at which the material is used, such as conveyance of shaped bricks for the construction of internal walls, in particular for the lining of converters, metallurgical furnaces, holding furnaces and suchlike, with a supporting structure consisting of a stand (7) for a continuous chain conveyor (10), which is able to be withdrawn partially away from the stand, in order to form, with its part which has been withdrawn away from the stand (7) over the curved part of a guide (21), a vertical conveyor section for the said conveyance from a higher position into a lower position or vice versa, characterized in that the continuous chain conveyor (10) is movable in a flexible channel (11) consisting of channel sections (11a, 11b, 11c) articulated to each other, which channel is supported by the stand (7) and together with the chain conveyor (10) is able to be withdrawn in relation to the stand (7) in order to form a protective channel along the vertical conveying section of the chain conveyor, which at least partially surrounds this vertical conveying section, in order to hold material on this part, and that the flexible channel has circularly curved guide flanges (20) on the sides facing each other toward the interior, which flanges support the chain conveyor (10) for transfer to the said vertical section.

2. Apparatus according to Claim 1, characterized in that the stand (7) has two guides (21) carried on opposing sides of the channel (11), which guide the channel (11) by means of jackwheels or track-supporting rollers (22), which are supported on link pins between the channel sections (11a, 11b, 11c) and that the guides (21) have the circularly curved part on their front end sections (21') to control the curvature formation of the channel in the transfer section.

3. Apparatus according to Claim 1 or 2, characterized in that the channel sections (11a, 11b, 11c) are of a principally U-shaped cross-section with a base wall (17) and two parallel side walls (16), and that the side walls (16) have, on their sides facing each other toward the interior, the circularly curved guide flanges (20) for guiding members, such as guide rolls (40) on the chain members of the chain conveyor (10), in which the circularly curved guide flanges of each channel section are arranged such that in zones outside the circularly curved transfer section of the channel they form punctiform guides for the chain conveyor (10), but in the circularly curved transfer section, together with the guide flanges of at least one adjacent channel section they form circularly curved continuous guide surfaces for the chain conveyor in the said transfer region.

4. Apparatus according to one of the preceding Claims, characterized in that two of the sections (11a, 11b) of the channel carry chain wheels (63, 64) for the continuous chains of the chain conveyor (10) on the ends thereof and that a drive for the driving wheels of the chain conveyor is firmly connected with at least one of these channel sections.

5. Apparatus according to one of the preceding Claims, characterized in that the channel (11) is able to be withdrawn and inserted in relation to the stand (7) by means of a drive (23-30) acting between the stand and the channel, which drive has a drive motor (23) carried by one channel section.

6. Apparatus according to Claim 5, characterized in that the drive comprises a transmission driven by the drive motor (23), which consists of a gear drive carried by the channel and at least one toothed rack (25) carried by the stand (7).

7. Apparatus according to Claim, 2, 3 and 6, characterized in that the said guides consist of U-sections (21) with open sides facing each other to receive the jackwheels or track-supporting rollers (22) of the channels (11) and that these U-sections each carry at least one toothed rack (25), with which pinions (30, 30') mesh in the said gear wheel transmission.

8. Apparatus according to one of the preceding Claims, characterized by a closure (55) to close the channel (11) on its open side along the vertical part of the channel.

9. Apparatus according to Claim 8, characterized in that the closure has the form of a shutter which is able to be withdrawn by a roller or suchlike, e.g. in the form of a flexible steel band, a grating or a strip of plates articulatedly connected with each other.

10. Apparatus according to one of the preceding Claims, characterized in that the one front end section (11a) of the channel (11) is able to be connected with a receiving station (3) for material, which is conveyed by means of the chain conveyor (10).

11. Apparatus according to one of the preceding Claims, characterized in that the stand (7) carries a supply conveyor (45) above the one open side of the channel (11), which extends downward with one part (45') into the channel to a position in the vicinity of the upper stringer of the chain conveyor (10) to supply material to this stringer, and that the channel is arranged so as to be freely displaced in relation to the supply conveyor (45).

12. Apparatus according to Claim 11, characterized in that it also has an auxiliary conveyor (4), which is to co-operate both with the supply conveyor (45) and also with the chain conveyor (10), in order to carry material over from the supply conveyor (45) into specified positions on the chain conveyor (10).

**Revendications**

1. Installation facilitant le travail pour le transport de matériaux de construction d'une position supérieure à une position inférieur ou l'inverse, à proximité de la place d'utilisation desdits matériaux, comme le transport de briques moulées pour la construction de parois internes, en particulier le revêtement de convertisseurs, de fours métallurgiques, de fours de maintien à température ou analogues, avec un ensemble porteur comportant un bâti (7) pour un transporteur à chaîne sans fin (10), qui est en partie extensible à partir du bâti pour former avec sa partie étirée à partir du bâti (7), au-delà de la partie courbe d'un guidage (21), une partie de transport verticale pour le transport, à partir d'une position supérieure à une position inférieure ou l'inverse, caractérisée en ce que le transporteur à chaîne sans fin (10) est mobile dans un canal flexible se composant de tronçons de canal (11a, 11b, 11c) articulés les uns aux autres, ledit canal étant porté par le bâti (7) et avec le transporteur à chaîne (10) extensible par rapport au bâti (7), pour former le long de la partie de transport verticale du transporteur à chaîne un canal de protection, qui entoure au moins en partie cette partie de transport verticale, pour maintenir des matériaux sur cette partie, et en ce que le canal flexible présente sur les faces tournées l'une vers l'autre vers l'intérieur des flancs de guidage (20) recourbés en forme de cercle, qui supportent le transporteur à chaîne (10) lors de la transition à la partie verticale.

2. Installation selon la revendication 1, caractérisée en ce que le bâti (7) présente deux guidages (21) portés sur les côtés du canal (11), qui guident le canal (11) au moyen de roues ou de galets de support (22), lesquels sont portés sur des tourillons articulés entre les tronçons de canal (11a, 11b, 11c), et en ce que les guidages (21) présentent la partie recourbée en forme de cercle à leurs extrémités antérieurs (21') pour commander la formation de la courbure du canal dans la partie de transition.

3. Installation selon l'une des revendications 1 ou 2, caractérisée en ce que les tronçons de canal (11a, 11b, 11c) sont de section principalement en forme de U avec un plancher (17) et deux parois latérales parallèles (16), et en ce que les parois latérales (16) présentent sur leurs faces tournées intérieurement l'une vers l'autre les flancs de guidage (20) recourbés en forme de cercle pour des éléments de guidage, comme des galets de guidage (40) sur les éléments à chaîne du transporteur à chaîne (10), les flancs de guidage recourbées en forme de cercle de chaque tronçon de canal étant agencées de sorte qu'ils forment dans des zones à l'extérieur de la partie de transition du canal recourbée en forme de cercle des guidages ponctuels pour le transporteur à chaîne (10), mais dans la partie de transition recourbée en forme de cercle avec les flancs de guidage d'au moins un tronçon de canal voisin des surfaces de guidage continues recourbée en forme de cercle pour le transporteur à chaîne (10) dans ladite zone de transition.

4. Installation selon l'une quelconque des revendications précédentes, caractérisée en ce que deux des tronçons (11a, 11b) du canal portent à leurs extrémités des roues à chaîne (63, 64) pour les chaînes sans fin du transporteur à chaînes (10) et en ce que un entraînement pour les roues d'entraînement du transporteur à chaîne est fixement relié à au moins l'un de ces tronçons de canal.

5. Installation selon l'une quelconque des revendications précédentes, caractérisée en ce que le canal (11) est extensible et rétractable par rapport au bâti (7) au moyen d'un entraînement agissant entre le bâti et le canal, lequel entraînement présente un moteur d'entraînement (23) porté par un tronçon du canal.

6. Installation selon la revendication 5, caractérisée en ce que l'entraînement englobe une transmission actionnée par un moteur d'entraînement (23), qui comprend un engrenage porté par le canal et au moins une crémaillère (25) portée par le bâti (7).

7. Installation selon les revendications 2, 3 et 6, caractérisée en ce que lesdits guidages se composent de profilés en U (21) avec leurs faces ouvertes tournées l'une vers l'autre pour recevoir les roues ou les galets d'appui (22) du canal (11) et en ce que ces profilés en U portent au moins chacun une crémaillère (25), dont les pignons (30, 30') s'engrènent dans ladite transmission à pignon.

8. Installation selon l'une quelconque des revendications précédentes, caractérisée par un obturateur (55) pour obturer le canal (11) sur sa paroi ouverte le long de la partie verticale du canal.

9. Installation selon la revendication 8, caractérisée en ce que l'obturateur a la forme d'une jalousie extensible à partir d'un rouleau ou analogue, par exemple sous la forme d'une bande d'acier flexible, d'une grille ou d'une bande de plaques reliées les unes aux autres de façon articulée.

10. Installation selon l'une quelconque des revendications précédentes, caractérisée en ce que le tronçon terminal antérieur (11a) du canal (11) est reliable à une station de recéption (3) pour des matériaux, qui sont transportés au moyen du transporteur à chaîne (10).

11. Installation selon l'une quelconque des revendications précédentes, caractérisée en ce que le bâti (7) porte au-dessus de l'un des côtés du canal (11) un transporteur d'amenée (45), qui s'etend par une partie (45') à l'intérieur du canal jusqu'à un point à proximité du compartiment supérieur du transporteur à chaîne (10) pour délivrer le matériau à ce compartiment, et en ce que le canal est agencé librement mobile par rapport au transporteur d'amenée (45).

12. Installation selon la revendication 11, caractérisée en ce qu'elle présente également un transporteur auxiliaire (4), qui doit coopérer aussi bien avec le transporteur d'amenée (45) qu'également avec le transporteur à chaîne (10), pour conduire des matériaux du transporteur d'amenée (45) à des points précis sur le transporteur à chaîne (10).

# Fig.1

Fig.2

Fig.3

# Fig.4

## Fig. 6

## Fig. 5